(19) **Europäisches Patentamt**
**European Patent Office**
**Office européen des brevets**

(11) **EP 1 537 702 B1**

(12) **EUROPEAN PATENT SPECIFICATION**

(45) Date of publication and mention
of the grant of the patent:
**07.11.2012 Bulletin 2012/45**

(51) Int Cl.:
***H04L 29/06*** (2006.01)     ***H04L 12/26*** (2006.01)

(21) Application number: **03757784.8**

(86) International application number:
**PCT/EP2003/009805**

(22) Date of filing: **04.09.2003**

(87) International publication number:
**WO 2004/025898 (25.03.2004 Gazette 2004/13)**

(54) **PROCEDURE AND SYSTEM FOR THE ANALYSIS AND THE EVALUATION OF THE CONDITIONS FOR ACCESSING DATA COMMUNICATION NETWORKS**

VERFAHREN UND SYSTEM ZUR ANALYSE UND AUSWERTUNG DER BEDINGUNGEN ZUM ZUGRIFF AUF DATENKOMMUNIKATIONSNETZWERKE

PROCEDE ET SYSTEME D'ANALYSE ET D'EVALUATION DES CONDITIONS D'ACCES A DES RESEAUX DE COMMUNICATION DE DONNEES

(84) Designated Contracting States:
**AT BE BG CH CY CZ DE DK EE ES FI FR GB GR HU IE IT LI LU MC NL PT RO SE SI SK TR**

(30) Priority: **09.09.2002 IT TO20020785**

(43) Date of publication of application:
**08.06.2005 Bulletin 2005/23**

(73) Proprietor: **Telecom Italia S.p.A.**
**20123 Milano (IT)**

(72) Inventors:
• **FAVA, Pierpaolo**
**I-10148 Torino (IT)**
• **FAURE Ragani, Alessandro**
**I-10148 Torino (IT)**
• **SASSI, Massimo**
**I-10148 Torino (IT)**

(74) Representative: **Battipede, Francesco et al**
**Telecom Italia S.p.A.**
**Piazza L. Einaudi, 8**
**20124 MIlano (IT)**

(56) References cited:
**WO-A-00/35130      WO-A-01/03374**

• **LIZCANO P J ET AL: "MEHARI: a system for analysing the use of the internet services" COMPUTER NETWORKS, ELSEVIER SCIENCE PUBLISHERS B.V., AMSTERDAM, NL, vol. 31, no. 21, 10 November 1999 (1999-11-10), pages 2293-2307, XP004304653 ISSN: 1389-1286**
• **GRAHAM-CUMMING J: "Hits and miss-es: a year watching the Web" COMPUTER NETWORKS AND ISDN SYSTEMS, NORTH HOLLAND PUBLISHING. AMSTERDAM, NL, vol. 29, no. 8-13, 1 September 1997 (1997-09-01), pages 1357-1365, XP004095330 ISSN: 0169-7552**

**EP 1 537 702 B1**

**Description**

This invention refers to the techniques used to analyse and evaluate the conditions for accessing data communication networks such as the Internet.

To be precise, this invention has been developed with reference to its possible application to a service aimed at telecommunication networks for corporations, such as those commonly called "Corporate" networks or systems.

For a clear overall view of the criteria of organization and operation of this type of system see document WO-A-02/43406.

Given that the data network continues to emerge as a key element in the development of its own activities, corporate operators are expressing the need to be able to use several Internet Service Providers or ISPs to connect up to Internet, thus giving rise to a situation of "multi-homing". This is an alternative to the traditional solution, which uses a single provider and is defined "single-homing".

Two main factors lie behind this need: reliability and Internet connection performance. The use of two or more different providers makes it possible to increase Internet connection availability, and guarantee, for example, greater potential for carrying out commercial transactions, or greater visibility on the outside world.

The use of various providers, for the same overall band, also improves the situation by appropriately balancing the traffic between the providers. For example, the decision to transit a certain type of traffic from/to a customer's site using provider A as opposed to provider B may result in an increase (or decrease) in performance depending on the provider's characteristics and routing policies.

In this type of application context, it is therefore a good idea to assess the opportuneness of changing from a "single-homed" situation to a "multi-homed" one, by using technical instruments and following objective criteria. In the event that a corporation decides to use a multi-homing connection architecture (connection to several providers), it is important to decide whether it would be a good idea to become an autonomous system (AS), and consequently implement the BGP (Border Gateway Protocol), or whether to use tools capable of handling the public addresses of several providers. The second solution assigns the addresses dynamically to corporate machines without incurring the cost of protocol management, which is costly both in economic terms and management terms as it requires high-level routers and highly qualified personnel.

The protocol called BGP (acronym for Border Gateway Protocol) is the tool currently used most to coordinate routing between different Autonomous Systems (or AS) on the Internet. For a general discussion of the characteristics and methods of use of the BGP protocol, see the document entitled "A Border Gateway Protocol 4 (BGP-4) " by Y. Rekhter and T. Li, RFC 1771, T. J. Watson Research Center, Cisco, March 1995.

Document JP9181722 illustrates a system capable of creating the map of the autonomous systems (AS) that make up the Internet network. This is done by collecting the information from the router BGP tables.

Document US-A-6 243 754 illustrates a system for the dynamic selection of Internet providers. This system makes it possible to take appropriate measurements and dynamically select the provider that will provide the best performance at a given moment in time.

Document WO-A-02/17110 illustrates a solution that optimises the routing of traffic to a destination, when multiple routes are available. The relevant measurements are taken by analysing performance on the access routers, and then the system selects the best path for each destination and reconfigures the routing to the destination.

The Document XP004304653 ("MEHARI: a system for analysing the use of the internet services") discloses a system for monitoring and analysing network traffic. MEHARI traffic processing modules provide information about conventional traffic statistics, the autonomous systems' traffic matrix-by-user group, validation of the port-to-application assignment and heuristic detection of unacceptable traffic flows. They can be customised and/or extended to suit the changing traffic information requirements of network administrators.

Finally, document WO-A-02/43322 illustrates a system that can be used if the network involved is part of a multi-homing configuration with various Internet providers. This system makes it possible to dynamically select the best link to the Internet each time or to balance the traffic between the different links. This solution therefore presupposes that several Internet providers have already been selected.

The present invention aims to provide a solution that is capable of providing tools and information - of an objective nature - to evaluate the opportuneness of adopting a multi-homed architecture.

According to the present invention, this aim is reached thanks to a procedure having the characteristics specifically referred to in the annexed claims. The invention also refers to the relative system, as well as the corresponding computer program product that can be directly loaded into the internal memory of a numerical processor, and which includes parts of the software code required to implement the procedure as per the invention when the product is run on a processor.

In the preferred form of embodiment, the solution given in this invention includes two main stages.

The first stage traces the customer's Internet traffic to identify the main networks addressed by the traffic, the Internet sites most frequently visited, and the relative Autonomous Systems (AS) passed through. This can be done with hardware tools such as commercial probes or with suitable software agents on IP-level networking equipment, e.g. NetFlow marketed by the Cisco Corporation (USA).

The second stage traces the tree that represents the paths of the autonomous systems passed through by the customer's traffic in order to decide whether (and with which provider) to connect up to the Internet in the multi-homed mode. This stage uses a tracing technique that requires the use of two modules.

The first module inputs the list of the most frequently visited Internet sites and then for each site it outputs the list of paths of the autonomous systems crossed to reach each destination. The second module aggregates all the information calculated by the first module and generates in output a tree representing all the paths of the autonomous systems crossed to reach all the destinations.

Three parameters should be indicated for each autonomous system: the percentage of use of the autonomous system, the average number of hops inside the autonomous system (AS) and the average amount of time spent inside the autonomous system.

The solution does not envisage the collection of information from the BGP table, nor the construction of the Internet network global map. It only envisages the construction of the tree of all the autonomous systems most frequently crossed by the traffic to all destinations. This in order to understand whether and with which providers the multi-homing Internet connection should be made.

Generally speaking, the solution given in the invention evaluates the need of a corporation to use several providers to access the Internet, thus avoiding the necessity of having to dynamically choose the best provider. All the destinations, in fact, are considered globally in order to decide not the best path but whether it is to the corporation's advantage to have several paths represented by as many Internet providers. The best path or paths will be selected subsequently according to criteria chosen by the user. The advantage of having several links with the Internet will then be objectively evaluated, and then, if necessary, the providers to be used to make the links identified.

In the preferred form of embodiment, the solution given in the invention provides two macro-categories of essential information for the decisional process:

- tracing of the customer's Internet traffic, which makes it possible to identify the main networks the traffic addresses (and the relative autonomous systems) and the relative volume;
- tracing of the sequence of the autonomous systems crossed by the customer's traffic in order to decide whether (and with which provider) to activate an Internet connection.

A series of measurements, taken with a probe or with router functions referred to earlier, makes it possible to obtain the customer traffic matrix and subsequently process the information to identify the target autonomous systems and the relative paths. All this constitutes the objective base of the decisional stage.

The invention will now be described here below by way of example, and not of limitation, with reference to the attached drawings in which:

- figures 1 and 2 illustrate the reference scenarios of a corporation that visits the Internet with a single-homed approach and a multi-homed approach respectively,
- figures 3 to 5 represent, in the form of "cake" diagrams, lists of the most frequently visited networks, most frequently sites and the main destination autonomous systems respectively,
- figure 6 illustrates the corresponding paths of the autonomous systems crossed by the customer's traffic,
- figure 7 illustrates the corresponding performance values,
- figure 8 is a flow diagram showing the development of the procedure according to the invention, and
- figure 9 illustrates a possible example of a table generated by a traceroute function during the implementation of the solution as given in the invention.

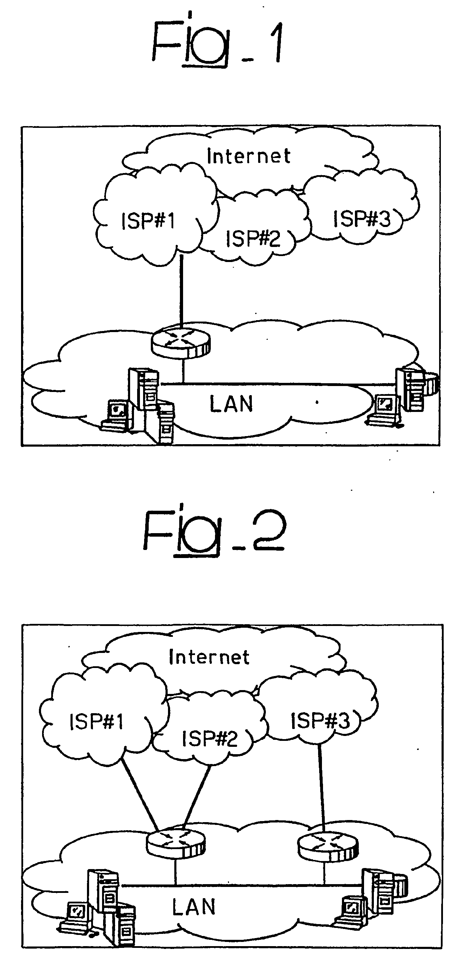

Figures 1 and 2 illustrate the reference scenario of a corporation (herein represented by its local network or LAN) in relation to the Internet access made through a single provider (ISP#1 in figure 1) and through various providers (providers IPS#1, ISP#2 and ISP#3 in figure 2). These are therefore the scenarios commonly called "single homed" and "multi-homed".

A corporation that currently uses a single-homed configuration and wishes to have a second Internet access through another provider must answer a certain number of questions when it starts assessing the need to move on to a multi-homed scenario.

In particular, it is important to be aware of the following when thinking about changing from a single-homed scenario to a multi-homed scenario: how the corporation's traffic is distributed, especially as regards the networks towards which the greatest volume of traffic is directed; which autonomous systems are crossed by the traffic, and in particular the autonomous systems in which the traffic terminates; who are the main visitors to the corporate web/e-commerce sites; and from which autonomous systems (AS) they originate.

It is especially important to identify which providers should be used to make new connections to the Internet when selecting a multi-homed scenario.

The solution described herein not only supplies the information on the requirements and most frequently used main traffic lines, necessary to make a decision on whether to change to multi-homing access but also, in the event that multi-homing has already been implemented, it makes it possible to define alternative connection and routing policies with various providers, and if necessary helps decide whether to change one or more providers or not.

The solution given in this invention aims to obtain the following for both scenarios described above:

- traffic measurements, such as band use measurements, traffic volume, congestion levels, load balancing, and indications on the most frequently visited networks;
- a list of autonomous systems (AS) most frequently crossed by the corporation's local LAN network to the Internet;
- percentages of use of the various autonomous systems towards the Internet, and
- statistics to analyse who are the main visitors to the corporation's local sites and from which autonomous systems these visits originate.

To do this, the solution in this invention uses various analysis tools.

These may be for example probes - of the type normally on sale - that can be used to obtain measurements and traffic statistics (most visited networks, traffic volume, congestion levels, use of links). Alternatively, the solution in the invention can use software agents on NetWorking IP equipment, e.g. NetFlow™, which has been mentioned earlier.

The information obtained is then processed so as to trace the paths of the autonomous systems most frequently visited, and to determine which providers are most involved, by analysing the percentage of use of the autonomous systems.

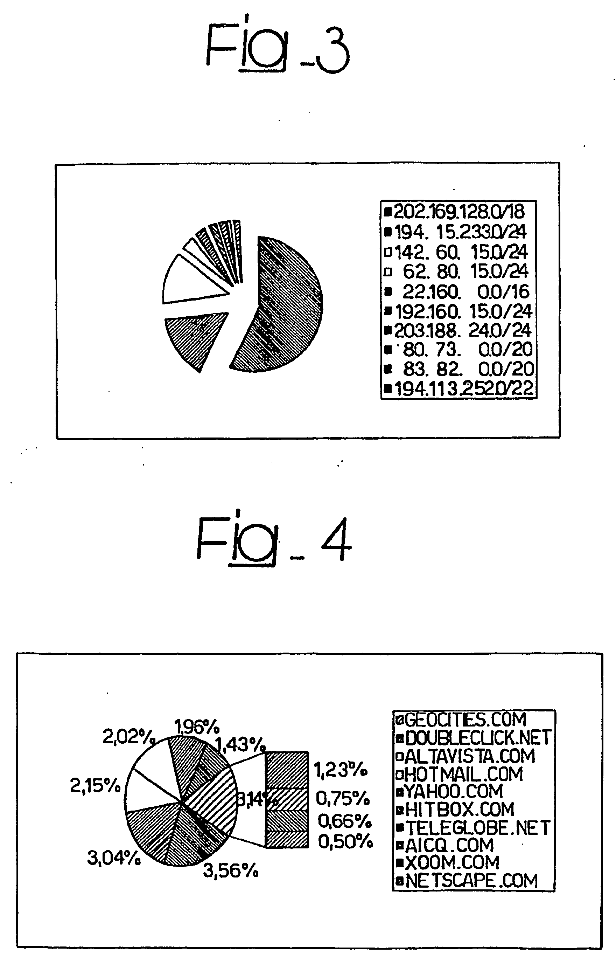

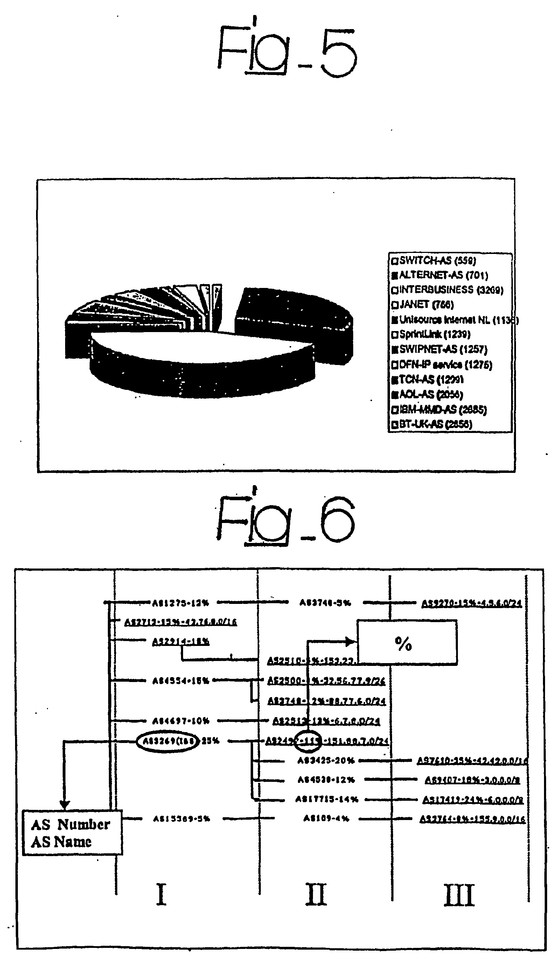

The examples shown in figures 3, 4 and 5 illustrate various diagrams, which can be obtained as shown later, and which show how the incoming/outgoing traffic to/from the LAN network examined is subdivided. They give the information relating to the destination networks (figure 3), to the percentage of traffic involved (figure 4), and to the pertinent autonomous system (figure 5).

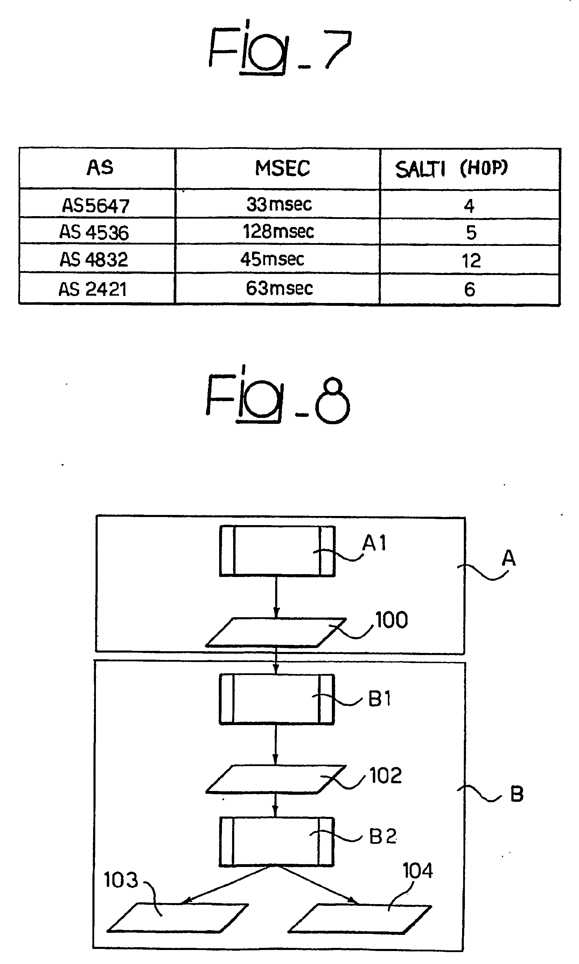

As shown in figure 6, a tree can be built with leaves that are the subnetworks that are the destinations of the traffic of the LAN involved. The corresponding report illustrated in figure 7, shows the autonomous systems crossed to reach the various subnetworks and gives information on how the traffic is divided (e.g. in percentage) at different levels of the tree.

The information in figure 6 helps choose which providers can be used to implement multi-homing policies or (in the event that a multi-homing scenario has already been implemented), to change the Internet connections already active.

Once the list of autonomous systems crossed by the customer's traffic has been drawn up, the average amount of time spent and the average number of hops inside the autonomous system can be found for each one as shown in figure 7.

Using the information described above, and proceeding as illustrated below with reference to figure 8, a report can be generated for the final user containing the following information:

- tracing of the customer's traffic to the Internet with identification of the main networks with which the traffic is involved (and the relevant autonomous systems), as well as the relative volume, and
- tracing of the sequence of autonomous systems crossed so as to determine whether and with which providers the Internet links should be made.

Stage A of figure 1 is aims at tracing the Internet traffic of the customer's LAN network and basically includes a step, marked with A1 in figure 8, that monitors the Internet access links for the collection of traffic data. The results, collectively referred to with 100, correspond to the list of IP networks and addresses most frequently visited by the customer's Internet traffic.

The subsequent stage, referred to with the letter B, includes the evaluation of the paths of the autonomous systems crossed (AS path) by the customer's traffic. The first step towards this is indicated with B1 and traces the autonomous systems crossed a sufficiently high number of times for each destination network/address in the list marked with 100.

The result of this, indicated with 102, is the list of paths of the autonomous systems crossed to reach each destination.

The next step, indicated with B2, then aggregates all the information collected. This processing firstly generates a group of results, 103, which corresponds to a unique tree made up of the paths of the autonomous systems crossed by the customer's traffic, indicating the subdivision, in percentage, of the traffic on each path.

A second set of results, 104, is a table showing the calculation of the average number of hops inside each autonomous system and the calculation of the average amount of time spent inside each autonomous system.

During stage A in figure 8, which identifies the IP networks that generate the most traffic from/to the network under examination, the solution employs systems of the type used to monitor the use of the links, trace the customer's traffic, and identify the main traffic lines, the most frequently visited Internet sites, the most frequently used protocols, and the busiest times of day.

To do this, the solution employs specific, known hardware probes able to provide information on the band use of an individual link, on the volume of data, on the subdivision according to protocol, IP address, and the traffic matrix between the network under examination and the Internet network. This makes it possible to identify which Internet sites are most frequently visited by the customer network, and consequently which are the main networks addressed by the customer's traffic. The incoming traffic is also taken into account, which gives information on the origin of those who connect up to the customer's network (server web, server ftp, etc.). These products generate a report including the list of IP addresses most frequently visited, and constitute the group of input data to be used for the subsequent stage of analysis and post-processing.

Alternatively, as has already been mentioned, software agents, such as NetFlow, operating on the Internet access routers, can be used. These software agents can be used to trace the incoming/outgoing traffic to/from the customer's router interface that connects to the Internet, and to identify the main traffic lines. All this can be done by analysing the operating status of the router in terms of CPU load and available memory. If this solution is adopted, it is necessary to decide where to export the statistics autonomously created by the router, and identify a machine onto which these data can be imported.

Stage B in figure 8 is used to obtain the information relating to the autonomous systems crossed by the customer's traffic to reach the destination addresses.

As already mentioned, this involves performing steps B1 and B2, and using an autonomous system tracing system basically consisting of two modules.

The first module inputs file 100 containing the IP addresses representing the sites most frequently visited by the customer from stage A. It sends a traceroute ICMP message (Internet Control Message Protocol) several times to each destination site (with a configurable frequency), and each time it traces the path to reach this destination.

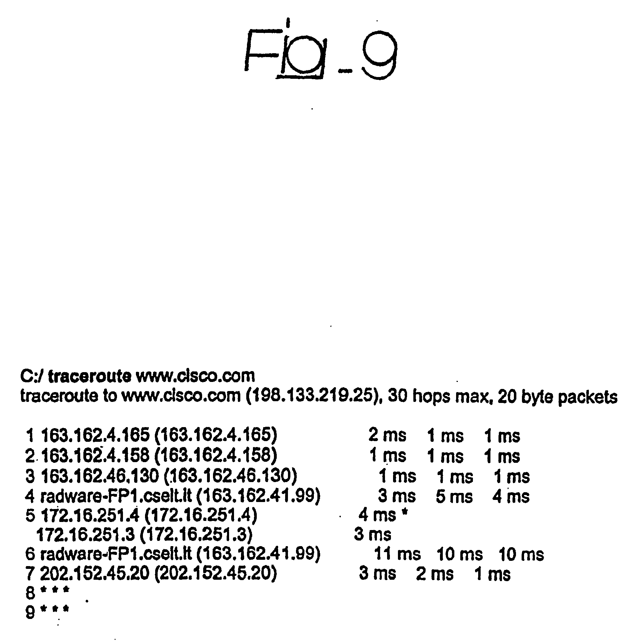

The path in question is expressed as a sequence of IP addresses. Figure 9 gives an example of the data table generated by this traceroute function.

In order to relate the aforesaid IP addresses to the corresponding autonomous systems (AS), software script is used to interface with databases like the ones handled by RIPE (Réseau IP Européen), ARIN (American Registry for Internet Numbers) and APNIC (Asia Pacific Network Information Center), i.e. by the three organisations that supervise the handling of problems regarding the Internet at a European, American and Asia-Pacific level.

The second module aggregates all the information calculated by the first module, generates a unique tree of autonomous system paths crossed by the customer's traffic to reach all the destinations, and gives three parameters for each autonomous system, i.e. percentage of use of the autonomous system, average number of hops inside the autonomous system, average amount of time spent inside the autonomous system.

To return to the methods of tracing the autonomous systems in greater detail, the first module, as mentioned previously, performs the following operations:

- inputs a list of destination URL (or host IP addresses or network IP addresses): an input file can be hypothesised with a simple list of URL separated by a separator, e.g. one in each row;
- performs the traceroute function several times according to a configurable frequency (e.g. every 30 minutes) of the path to each element (URL, host address or IP address) in the list;
- invokes a remote identification service (*whois?*) of the aforementioned databases RIPE, ARIN, APNIC, for each IP address generated by the afore-said traceroute function, in order to obtain the name of the autonomous system to which the IP address belongs, and the number of the AS to which the IP address belongs; and
- organises the data obtained into data output format.

The format in question generally envisages output files for each destination IP address, in which each file is a list of lines or rows with identical structure.

Each line contains the path of the AS crossed to reach a single destination, and is obtained by a single traceroute command used on the destination address. Each output file contains as many lines as traceroutes performed according to a configurable frequency and each line is an ordered sequence of elements separated by a separator such as ";" (semi-colon).

Each element represents the data relating to an autonomous system of the path. In the preferred embodiment, the format of each element includes the following in the order given:

- the order number of the autonomous system following the IP address sequence supplied by the traceroute function,

- the text name of the autonomous system,
- the identification number of the autonomous system,
- the number of hops that the single tracing command has measured inside the autonomous system (several IP addresses may belong to the same AS), and
- the time interval spent in the autonomous system, normally expressed in milliseconds, measured by the single tracing command.

Two typical examples of input and output files of the module under examination are given below.
Example of an Input File:

www.cisco.com

www.telecomitalia.it

193.206.129.254

193.206.132.146

193.206.132.178

162.40.1030.0

Example of an Output File:

- 1,AS_alfa,AS100,3hop,0.326msec;2,AS_beta,AS160,7 hop, 0.36 msec;3,AS_gamma,AS200,2 hop, 0.776 msec;
- 1,AS-alfa,AS100,3 hop, 0.326 msec 1;2,AS_epsilon, AS180 4 hop, 1.3 msec;
- 1,AS_alfa,AS100 ,3 hop ,0.526 msec ;2,AS_beta, AS160,7 hop, 0.38 msec;3,AS_epsilon,AS180 4 hop, 1.3 msec.

The module uses the *whois* remote service of the databases RIPE, ARIN, APNIC for each IP address documented by the traceroute function to obtain information relating to the name and number of the autonomous system in question. All the other information (i.e. the number of hops inside each autonomous system and the number of milliseconds spent in each autonomous system) is processed by the module starting with an analysis of the output of each tracing operation.
Figure 9 gives an example of output of the aforesaid traceroute command.
Once it has been determined which autonomous system each hop belongs to by means of the information from the *whois* service, it is easy to calculate the average time (approximate) for the transit of packets in the autonomous system and the number of internal hops.
The methods that can be used by the module to ascertain the input of a list of destination hosts (URL) and to perform the traceroute function for each one of them sequentially, can be improved in terms of rapidity by generating a certain number of processes to each of which a traceroute command can be given in parallel. The original set of destinations can be divided and a subset of destinations attributed to each of the processes generated.
This results in the IP addresses table, and consequently the information on the autonomous systems, being obtained more quickly. Generally speaking, the execution times are approximately and on average inversely proportional to the number of parallel processes started, at least until the number is not equal to the original number of URL. At each module run, it is also possible to dynamically give a value of the parallel processes in relation to the number of input URL's, by making this number vary from one to the original number of URL's.
It should also be appreciated that it is not generally necessary to access the *whois* remote service for each IP generated by the traceroute function. Bearing in mind that during these interrogations it is extremely probable that the first hops in a path already travelled will appear to be revisited, it is clear that it is a good idea to create and use a local cache memory that can store the correspondence between the IP addresses and the information relating to their autonomous systems. This means that the *whois* remote service interrogations do not need to be carried out again, if the last interrogation took place only a short time before.
Given that the information in the external databases, such as the RIPE, ARIN and APNIC databases, RIPE, ARIN e APNIC), may vary, once this information has been entered (and become redundant) inside the cache memory, it cannot be considered definite. A cache memory information update function must therefore be included.
At a configurable frequency, this function indicates for how long the information has not been updated and, for information considered no longer valid because not updated for a long time, it interrogates the external databases and updates the information in the cache memory.

There may be cases when these databases have no information on the autonomous system relating to a given IP address.

This information can be obtained with other tools, e.g. by consulting web sites, and the data not obtainable from interrogating the aforesaid databases can be added to the local cache.

The second module referred to previously inputs one or more text files generated by the first module, and its objective is to aggregate the autonomous system (AS) paths for all the destinations.

Processing then traces the aggregated paths for all the destinations. It then outputs a tree with leaves that are the destination subnetworks of the customer's traffic and branches that are the autonomous systems crossed by the traffic. This representation highlights the autonomous systems crossed to reach the various subnetworks and shows how the traffic is divided (in percentage) at the different tree levels, in the terms shown in figure 6.

This second module therefore has the following aims:

- represent the aggregated path list (AS path),
- calculate the path crossing percentage to all the URL's obtained by aggregating the information received from the first module,
- generate in output a legible text format,
- generate in output a format that can be integrated with external tools or software,
- generate in output a table including the calculation of the average number of hops inside each autonomous system and the calculation of the average time spent inside each autonomous system.

This second module inputs and processes one or more text files generated by the first module seen previously. To satisfy its aim of constructing a tree with leaves representing the destination subnetworks of customer traffic with indications of the autonomous systems crossed to reach these subnetworks, and to provide information on how the traffic is divided (in percentage) at different tree levels, the first step for this second module is to generate a data structure representing the paths generated by the first module in the central memory.

In its preferred embodiment, the representation used is an aggregated list (LA), or a group of prefix-aggregated lists. An aggregated list represents a variable number of lists (of variable length), of nodes (autonomous systems, in this particular case) that share the common maximum prefix.

For example the following lists can be considered:

- abcdefghi
- abcde123
- ab123

These lists can be represented as follows with an LA:

$$\texttt{a-b+c-d-e+f-g-h-i}$$
$$\texttt{| \quad +1-2-3}$$
$$\texttt{+1-2-3}$$

The example shows that the nodes <1,2,3> appear twice in the LA.

Therefore, if the first module generates the following output (where for the sake of simplicity the information about the number of hops and time inside each AS is not given) :

| 1, AS-ISP1, | 2, XANGE-NET | 3, AS-ISP3, | 4,AS-US-ISP |
|---|---|---|---|
| ASnumber1 | ASnumber3 | ASnumber7 | ASnumber9 |
| 1,AS-ISP1, ASnumber1 | 2,WEB-NET, ASnumber4 | | |
| 1, AS-ISP1, ASnumber1 | 2,XANGE-NET, ASnumber3 | 3: AS-GlobalSP, ASnumber8 | 4, AS-EDU-net, ASnumber10 |
| 1: AS-ISP2, ASnumber2 | 2 new-NET ASnumber5 | | |
| 1,AS-ISP2, ASnumber2 | 2, Other-NET, ASnumber6 | | |

then the second module must build up the following aggregated lists

| ASP-ISP1,ASnumber1 | XANGE-NET, Asnumber3(40%) | AS-ISP3, | AS-US-ISP, |
|---|---|---|---|
| (60%) | | Asnumber7(20%) | ASnumber9 (20%) |
| | + | AS-GlobalISP, Asnumber8 (20%) | AS-EDU-net, Asnumber10 (20%) |
| + | WEB-NET-WEB, Asnumber4 (20%) | | |
| AS-ISP2,ASnumber2 (40%) | new-NET, ASnumber5 (20%) | | |
| + | Other-NET,ASnumber6 (20%) | | |

The percentage of traffic indicated next to each autonomous system represents, in terms of overall traffic, the percentage of traffic that passes through the autonomous system. For example, starting from the output of the first module, it is possible to deduce that since there are 3 examples of AS-ISP1 and AS-ISP1 at first level in the period of time analysed, 60% of the total traffic transited on the first autonomous system and 40% on the second.

In the 60% of the traffic generated in AS-ISP1, since there are 2 examples of XANGE-NET at the second level with prefix AS-ISP1 and one example of web-NET with the same prefix, we can deduce that 40% of this traffic transited to XANGE-NET and the remaining 20% to web-NET.

Similar considerations can be made for the levels. In this way it is possible to know how the customer's Internet traffic is divided between the various autonomous systems in order to choose, if necessary, the provider with which to implement a multi-homed configuration, or if the corporation has already adopted a configuration of this type, to decide whether to confirm the agreements with the current providers or whether to use other providers.

In addition to the first output, the second module generates a summary table, starting from the input of the first module, containing the list of all the autonomous systems analysed.

For each one of these, the average number of hops and the average amount of time spent inside each autonomous system is calculated.

An example of a table of this type is given below:

| AS Name | ASnumber | Time | Number hops |
|---|---|---|---|
| XANGE-NET | ASnumber3, | 22.66 ms | 1.02 |
| AS-ISP1 | ASnumber1, | 55.75 ms | 5.88 |
| AS-GlobalISP | ASnumber8, | 65.42 ms | 4.17 |
| AS-ISP3 | ASnumber7, | 15.96 ms | 4.88 |
| AS-US-ISP | ASnumber9, | 16.89 ms | 2.50 |
| AS-ISP2 | ASnumber2, | 96.65 ms | 1.61 |
| WEB-NET | ASnumber4, | 0.00 ms | 1.00 |
| New-NET | ASnumber5, | 58.40 ms | 1.00 |
| AS-EDU-net | ASnumber10, | 48.20 ms | 1.20 |
| Other-NET | ASnumber6, | 13.2 ms | 2.20 |

Naturally, while keeping to the principal of the invention, the details regarding the construction and the embodiments of the invention may vary considerably with respect to what has been described and illustrated, without however departing from the scope of the present invention, which is defined by the appended claims.

**Claims**

1. Procedure for the analysis of the access to a data communication network by a user (LAN), comprising the operations of tracing (A1) the traffic of said user (LAN), and identifying a group of networks with which said traffic is mainly handled, by defining (100) relative autonomous systems (AS) and tracing the sequence of autonomous systems crossed by said traffic, **characterized in** the tracing operation of said sequence including:

   - a first stage (B1), to provide the list (102) of the paths of autonomous systems crossed by said traffic to reach each destination, and
   - a second stage (B2), to aggregately elaborate said list of paths, outputting a tree representing all the paths of the autonomous systems crossed by the traffic of said user (LAN) to reach all corresponding destinations.

2. Procedure as per claim 1, **characterised by** the fact that it comprises the operation of determining the routing of said traffic on the branches of said tree, and the operation of associating the respective indicative values of the traffic that crosses the branch to the branches of said tree.

3. Procedure as per claim 1 or claim 2, **characterised by** the fact that it comprises the operation of using hardware probes to trace the traffic of said user.

4. Procedure as per claim 3, **characterised by** the fact that it comprises the operation of configuring said hardware probes to provide information selected in the group consisting of: band use of the individual link, data volume, protocol-subdivision, IP address-subdivision, traffic matrix between the user (LAN) and the network.

5. Procedure as per claim 3 or claim 4, **characterised by** the fact that it comprises the operation of configuring said hardware probes to determine at least one selected item in the group consisting of: sites most frequently visited by the user, main networks to which the user addresses its traffic, and the origin of who connects up to said user.

6. Procedure as per claim 1 or claim 2, **characterised by** the fact that it comprises the operation of setting software agents on the data communication network access routers to trace said user traffic.

7. Procedure as per claim 6, **characterised by** the fact that it comprises the operation of configuring said software agents to trace the traffic through the interface of the router of said user to determine the main traffic lines.

8. Procedure as per claim 6, **characterised by** the fact that it comprises the operation of configuring said software agents to analyse the operating status of the respective router in terms of CPU load and available memory.

9. Procedure as per claim 6, **characterised by** the fact that it comprises the operation of providing a target machine for the transfer of the statistics obtained by said routers.

10. Procedure as per claim 1, **characterised by** the fact that it comprises the operation of generating, as the result of said traffic tracing operation of said user, at least one parameter selected from the group consisting of: destination networks of said traffic, percentage of traffic involved, pertinent autonomous system.

11. Procedure as per claim 1, **characterised by** the fact that said first stage (B1) comprises the operations of inputting a file containing the IP addresses representing the sites most frequently visited by said user and performing a traceroute function for each destination site, by tracing the path to reach this destination.

12. Procedure as per claim 11, **characterised by** the fact that it comprises the operation of tracing said path as a sequence of autonomous systems (AS) crossed.

13. Procedure as per claim 11, **characterised by** the fact that in said first stage said tracing operations are carried out repeatedly with a given frequency.

14. Procedure as per claim 13, **characterised by** the fact that said frequency can be determined and selected.

15. Procedure as per claim 1, **characterised by** the fact that said second stage (B2) comprises the operation of generating a unique tree of paths of the autonomous systems crossed by the traffic of said user to reach all the destinations, the leaves of said tree being indicative of the destination subnetworks of the traffic of said user.

16. Procedure as per claim 1, **characterised by** the fact that said second stage (B2) comprises the operation of providing, in relation to the list of said autonomous systems crossed by said traffic of said user, at least one parameter from: the percentage of use of the autonomous system, a time value for passing through said autonomous systems and a hops value inside the autonomous system.

17. Procedure as per claim 16, **characterised by** the fact that at least one and preferable all said data provided are expressed as an average value.

18. Procedure as per claim 1 or claim 11, **characterised by** the fact that said first stage (B1) comprises the operation of invoking for each IP address generated via said traceroute function, a remote service to obtain at least one item of the information included in the group consisting of: name of the autonomous system to which the generated IP address belongs and the number of the autonomous system to which said generated IP address belongs.

19. Procedure as per claim 18, **characterised by** the fact that said remote service is the *whois* service of the databases RIBE, ARIN, APNIC.

20. Procedure as per claim 1, **characterised by** the fact that said first stage (B1) comprises the operation of generating a data file (103) comprising information selected from the group consisting of:

    - order number of the autonomous system following the sequence of IP addresses provided by said traceroute function,
    - text name of the autonomous system,
    - identification number of the autonomous system,
    - number of hops that a single tracing command has measured inside the autonomous system, and
    - time of permanence in the autonomous system measured by a single tracing command.

21. Procedure as per claim 1 or claim 11, **characterised by** the fact that it comprises the operation of performing a plurality of said tracing functions in parallel during said first stage.

22. Procedure as per claim 1, **characterised by** the fact that said second stage (B2) comprises the operation of storing information of correspondence between IP addresses and the data relating to the pertinent autonomous systems.

23. Procedure as per claim 1, **characterised by** the fact that said second stage (B2) comprises the operation of generating the leaves of said tree as identification of the destination subnetworks of the traffic of said user and the relative branches as identifications of the autonomous systems crossed by the traffic.

24. Procedure as per claim 1, **characterised by** the fact that said second stage (B2) is performed in association with a central memory with a data structure that represents the paths generated in said first stage in the form of at least one aggregated list.

25. Procedure as per claim 24, **characterised by** the fact that the said at least one aggregated list is identified as representing a variable number of autonomous system lists that share a common maximum prefix.

26. System for the analysis of the access to a data communication network by a user (LAN), the system being configured to trace (A1) the traffic of said user (LAN) and identify a group of networks with which this traffic is mainly involved, by identifying (100) relative autonomous systems (AS) and tracing the sequence of autonomous systems crossed by said traffic; **characterized by** the system including a first module (B1) that provides the list (102) of paths of autonomous systems crossed by said traffic to reach each destination, and a second module (B2) to aggregately elaborate said list of paths by outputting a tree representing all the paths of the autonomous systems crossed by the traffic of said user (LAN) to reach all relative destinations.

27. System as per claim 26, **characterised by** the fact that the system is configured to measure the routing of said traffic on the branches of said tree and associate respective indicative values of the traffic crossing the branch to the branches of said tree.

28. System as per claim 26 or claim 27, **characterised by** the fact that it comprises hardware probes to trace the traffic of said user.

**29.** System as per claim 28, **characterised by** the fact that said hardware probes are configured to supply information selected in the group consisting of: use of single link band, data volume, protocol-subdivision, IP address-subdivision, traffic matrix between the user (LAN) and the network.

**30.** System as per claim 28 or claim 29, **characterised by** the fact that said hardware probes are configured to determine at least one item selected in the group consisting of: sites most frequently visited by the user, main networks addressed by the user traffic, origin of those who connect up to said user.

**31.** System as per claim 26 or claim 27, **characterised by** the fact that it comprises software agents on the data communication network access router to trace the said traffic of the user.

**32.** System as per claim 31, **characterised by** the fact that said software agents are configured to trace the traffic through the interface of the router of said user by determining the main traffic lines.

**33.** System as per claim 31, **characterised by** the fact that said software agents are configured to perform an analysis on the operating status of the respective router in terms of CPU load and available memory.

**34.** System as per claim 31, **characterised by** the fact that it comprises a target machine for the transfer of the statistics obtained by said routers.

**35.** System as per claim 26, **characterised by** the fact that it is configured to generate as the result of said tracing operation of the traffic of said user at least one of the parameters selected from the group consisting of: destination networks of said traffic, percentage of traffic involved, pertinent autonomous system.

**36.** System as per claim 26, **characterised by** the fact that said module (A1) is configured to input a file containing the IP addresses representing the sites most frequently visited by said user and to perform a tracing operation (traceroute) to this destination for each destination site, by tracing the path to reach this destination.

**37.** System as per claim 36, **characterised by** the fact that said first module is configured to trace said path as a sequence of autonomous systems (AS) that are crossed.

**38.** System as per claim 36, **characterised by** the fact that said first module is configured to repeatedly perform said tracing operations with a given frequency.

**39.** System as per claim 38, **characterised by** the fact that said first module is configured so that said frequency can be determined and selected.

**40.** System as per claim 26, **characterised by** the fact that said second module (B2) is configured to output a unique tree of autonomous systems paths crossed by the traffic of said user to reach all the destinations, the leaves of said tree being indicative of the destination subnetworks of the traffic of said user.

**41.** System as per claim 26, **characterised by** the fact that said second module (B2) is configured to provide, in relation to the list of said autonomous systems crossed by said traffic of said user, at least one parameter from: the percentage of use of the autonomous system, a value of time of permanence inside said autonomous systems and a value of hops inside said autonomous system.

**42.** System as per claim 41, **characterised by** the fact that at least one and preferably all said data provided are expressed as an average value.

**43.** System as per claim 26 or claim 36, **characterised by** the fact that said first module (B1) is configured to invoke for each IP address generated via said tracing function (traceroute), a remote service to obtain at least one of the following pieces of information included in the group consisting of: name of the autonomous system to which the generated IP address belongs and number of the autonomous system to which the aforesaid generated IP address belongs.

**44.** System as per claim 43, **characterised by** the fact that said remote service is the *whois* service of the databases RIBE, ARIN, APNIC.

45. System as per claim 26, **characterised by** the fact that said first module (B1) outputs a data file (103) including information selected in the group consisting of:

- order number of the autonomous system following the sequence of the IP addresses provided by said tracing function,
- text name of the autonomous system,
- identification number of the autonomous system,
- number of hops that a single tracing command has measured inside the autonomous system, and
- time of permanence in the autonomous system measured by a single tracing command.

46. System as per claim 26 or claim 36, **characterised by** the fact that said first module is configured to perform in parallel a plurality of said tracing functions.

47. System as per claim 26, **characterised by** the fact that said second module (B2) contains a cache memory to store information of correspondence between IP addresses and data relating to the pertinent autonomous systems.

48. System as per claim 26, **characterised by** the fact that said second module is configured so that the leaves of said tree are the destination subnetworks of the traffic of said user and the relative branches are the autonomous systems crossed by the traffic.

49. System as per claim 26, **characterised by** the fact that said second module (B1) is associated to one central memory with a data structure that represents the paths generated by said first module in the form of at least one aggregated list.

50. System as per claim 49, **characterised by** the fact that the said at least one aggregated list is identified as representing a variable number of autonomous system lists (VAS) that share a common maximum prefix.

51. Computer program product directly loadable in a numerical processor's internal memory and including parts of software code to implement the procedure as per any one of the claims 1 to 25 when the product is run on a processor.

**Patentansprüche**

1. Verfahren zur Analyse des Zugriffs auf ein Datenkommunikationsnetzwerk durch einen Nutzer (LAN) mit folgenden Schritten: Verfolgen (A1) des Traffics des Nutzers (LAN) und Identifizieren einer Gruppe von Netzwerken, die den Traffic im Wesentlichen abwickeln, indem relativ autonome Systeme (AS) definiert werden (100) und die Sequenz der autonomen Systeme, die durch den Traffic passiert werden, verfolgt wird, **dadurch gekennzeichnet, dass** der Verfolgungsschritt der Sequenz Folgendes umfasst:

- in einer ersten Stufe (B1) wird die Liste (102) der Pfade der autonomen Systeme, die durch den Traffic passiert werden, um jedes Ziel zu erreichen, bereitgestellt, und
- in einer zweiten Stufe (B2) wird, um die Liste der Pfade nach und nach zu vervollkommnen, ein Baum ausgegeben, der alle Pfade der durch den Traffic des Nutzers (LAN) passierten autonomen Systeme, um die entsprechenden Ziele zu erreichen, dargestellt.

2. Verfahren nach Anspruch 1, **dadurch gekennzeichnet, dass** es einen Schritt des Bestimmens des Routings für den Traffic auf den Zweigen des Baumes umfasst und den Schritt des Verknüpfens der Zweige des Baumes mit den entsprechenden indikativen Werten des den Zweig passierenden Traffics.

3. Verfahren nach Anspruch 1 oder Anspruch 2, **dadurch gekennzeichnet, dass** es den Schritt des Nutzens von Hardware-Sonden umfasst, um den Traffic des Nutzers nachzuverfolgen.

4. Verfahren nach Anspruch 3, **dadurch gekennzeichnet, dass** es den Schritt des Konfigurierens der Hardware-Sonden umfasst, um Informationen, die aus dem Folgenden ausgewählt werden, bereitzustellen: die Bandnutzung der individuellen Verbindung, Datenvolumen, Protokoll-Unterteilung, IP Adress-Unterteilung, Trafficmatrix zwischen dem Nutzer (LAN) und dem Netzwerk.

5. Verfahren nach Anspruch 3 oder Anspruch 4, **dadurch gekennzeichnet, dass** es den Schritt des Konfigurierens der Hardware-Sonden umfasst, um zumindest ein Element, welches aus der folgenden Gruppe gewählt wird, zu bestimmen: Orte, die am häufigsten durch den Nutzer besucht wurden, Hauptnetzwerke, zu welcher der Nutzer sein Traffic richtet, und der Ursprung von denjenigen, der sich mit dem Nutzer verbindet.

6. Verfahren nach Anspruch 1 oder Anspruch 2, **dadurch gekennzeichnet, dass** es den Schritt des Einrichtens von Software-Agenten auf den Datenkommunikationsnetzwerk-Zugangsrouter umfasst, um den Nutzertraffic nachzuverfolgen.

7. Verfahren nach Anspruch 6, **dadurch gekennzeichnet, dass** es den Schritt des Konfigurierens der Software-Agenten umfasst, um den Traffic durch die Schnittstelle des Routers des Nutzers nachzuverfolgen, um die Haupttrafficverbindungen zu bestimmen.

8. Verfahren nach Anspruch 6, **dadurch gekennzeichnet, dass** es den Schritt des Konfigurierens der Software-Agenten umfasst, so dass der Betriebsstatus des entsprechenden Routers durch die CPU-Auslastung und den verfügbaren Speicher analysiert wird.

9. Verfahren nach Anspruch 6, **dadurch gekennzeichnet, dass** es den Schritt des Bereitstellens einer Zielmaschine für den Transfer von Statistiken, die durch den Router erhalten werden, umfasst.

10. Verfahren nach Anspruch 1, **dadurch gekennzeichnet, dass** es den Schritt des Erzeugens, und zwar als Resultat des Traffic-Nachverfolgungsschrittes des Nutzers, von zumindest einem Parameter umfasst, welcher aus der Gruppe, die Folgendes umfasst, ausgewählt wird:

   Zielnetzwerke des Traffics, Prozentsatz des involvierten Traffics, maßgebliches autonomes System.

11. Verfahren nach Anspruch 1, **dadurch gekennzeichnet, dass** die erste Stufe (B1) die folgenden Schritte umfasst: Eingabe eines Files mit IP Adressen von Orten, die am häufigsten durch den Nutzer besucht wurden, und Ausführen einer Routen-Nachverfolgungsfunktion für jeden Zielort, indem der dieses Ziel erreichende Pfad nachverfolgt wird.

12. Verfahren nach Anspruch 11, **dadurch gekennzeichnet, dass** es den Schritt des Nachverfolgens des Pfades in Form einer Sequenz der passierten autonomen Systeme (AS) umfasst.

13. Verfahren nach Anspruch 11, **dadurch gekennzeichnet, dass** in der ersten Stufe des Nachverfolgungsschrittes wiederholt mit einer gegebenen Frequenz ausgeführt wird.

14. Verfahren nach Anspruch 13, **dadurch gekennzeichnet, dass** die Frequenz bestimmt und ausgewählt werden kann.

15. Verfahren nach Anspruch 1, **dadurch gekennzeichnet, dass** die zweite Stufe (B2) den Schritt des Erzeugens eines eindeutigen Baumes von Pfaden der passierten autonomen Systeme durch den Traffic des Nutzers, um alle Ziele zu erreichen, umfasst, wobei die Blätter des Baumes indikativ für die Ziel-Unternetzwerke des Traffics des Nutzers sind.

16. Verfahren nach Anspruch 1, **dadurch gekennzeichnet, dass** die zweite Stufe (B2) den Schritt des Bereitstellens, und zwar in Bezug auf die Liste der passierten autonomen Systeme durch den Traffic des Nutzers, von zumindest einem Parameter aus dem Folgenden umfasst: die Prozentzahl der Nutzung des autonomen Systems, einen Zeitwert für das Passieren durch die autonomen Systeme und einen Hops-Wert innerhalb des autonomen Systems.

17. Verfahren nach Anspruch 16, **dadurch gekennzeichnet, dass** zumindest ein Datenelement oder vorzugsweise alle bereitgestellten Daten in Form von Durchschnittswerten ausgedrückt werden.

18. Verfahren nach Anspruch 1 oder 11, **dadurch gekennzeichnet, dass** die erste Stufe (B1) den Schritt des Aktivierens eines Ferndienstes für jede durch die Routen-Nachverfolgungsfunktion erzeugte IP Adresse umfasst, um zumindest ein Informationselement, welches aus der folgenden Gruppe ausgewählt wird, zu erhalten:

   Name des autonomen Systems zu welchem die erzeugte IP Adresse gehört und die Nummer des autonomen Systems, zu welchem die erzeugte zugehörige IP Adresse gehört.

19. Verfahren nach Anspruch 18, **dadurch gekennzeichnet, dass** der Ferndienst der whois-Service der Datenbanken RIBE, ARIN, APNIC ist.

**20.** Verfahren nach Anspruch 1, **dadurch gekennzeichnet, dass** die erste Stufe (B1) den Schritt des Erzeugens eines Datenfiles (103) umfasst, welche Informationen, die aus der folgenden Gruppe ausgewählt werden, aufweist:

- Ordnungszahl des autonomen Systems, und zwar der Sequenz von IP Adressen, die durch die Routen-Nachverfolgungsfunktion bereitgestellt wurde, folgend,
- Textname des autonomen Systems,
- Identifizierungsnummer des autonomen Systems,
- Anzahl der Hops, welche ein einzelnes Nachverfolgungskommando innerhalb des autonomen Systems gemessen hat, und
- Anwesenheitszeit in dem autonomen System, die durch ein einzelnes Nachverfolgungskommando gemessen wurde.

**21.** Verfahren nach Anspruch 1 oder Anspruch 11, **dadurch gekennzeichnet, dass** es den Schritt des parallelen Ausführens von mehreren Nachverfolgungsfunktionen in der ersten Stufe umfasst.

**22.** Verfahren nach Anspruch 1, **dadurch gekennzeichnet, dass** die zweite Stufe (B1) den Schritt des Speicherns von Information der Entsprechung zwischen den IP Adressen und den Daten in Bezug auf die maßgeblichen autonomen Systeme umfasst.

**23.** Verfahren nach Anspruch 1, **dadurch gekennzeichnet, dass** die zweite Stufe (B2) den Schritt des Erzeugens von Blättern des Baumes als Identifikation der Ziel-Unternetzwerke des Traffics des Nutzers umfasst und von relativen Zweigen als Identifikationen der durch den Traffic passierten autonomen Systeme umfasst.

**24.** Verfahren nach Anspruch 1, **dadurch gekennzeichnet, dass** die zweite Stufe (B2) in Verbindung mit dem zentralen Speicher mit einer Datenstruktur, die die Pfade darstellt, die in der ersten Stufe in der Form von zumindest einer Sammelliste erzeugt wurden, ausgeführt wird.

**25.** Verfahren nach Anspruch 24, **dadurch gekennzeichnet, dass** die zumindest eine Sammelliste als eine Darstellung für eine variable Anzahl von autonomen Systemlisten, die ein gemeinsames maximales Präfix aufweisen, identifiziert wird.

**26.** System zur Analyse des Zugriffs auf ein Datenkommunikationsnetzwerk durch einen Nutzer (LAN), wobei das System ausgebildet ist, um den Traffic des Nutzers (LAN) nachzuverfolgen und um eine Gruppe von mit dem Traffic hauptsächlich involvierten Netzwerken zu identifizieren, indem relative autonome Systeme (AS) identifiziert werden und die Sequenz von den durch den Traffic passierten autonome Systemen nachverfolgt werden; **dadurch gekennzeichnet, dass** das System ein erstes Modul (B1), welches die Liste (102) von Pfaden von durch den Traffic passierten autonomen Systemen zum Erreichen des Zieles bereitstellt, und das zweite Modul (B2) die Liste der Pfade nach und nach durch die Ausgabe eines Baumes vervollkommnet, wobei der Baum alle Pfade der autonomen Systeme, die durch den Traffic des Nutzers (LAN) auf dem Weg zu allen relativen Zielen passiert wurden, darstellt.

**27.** System nach Anspruch 26, **dadurch gekennzeichnet, dass** das System ausgebildet ist, um das Routing des Traffics auf den Zweigen des Baumes zu messen und um die Zweige des Baumes mit entsprechenden indikativen Werten des Traffics, der den Zweig passiert, zu verknüpfen.

**28.** System nach Anspruch 26 oder 27, **dadurch gekennzeichnet, dass** es Hardware-Sonden umfasst, um den Traffic des Nutzers nachzuverfolgen.

**29.** System nach Anspruch 28, **dadurch gekennzeichnet, dass** die Hardware-Sonden ausgebildet sind, um Informationen aus der Gruppe, die Folgendes umfasst, bereitzustellen: Nutzung eines einzigen Verbindungsbandes, Datenvolumen, Protokoll-Unterteilung, IP Adressen-Unterteilung, Trafficmatrix zwischen dem Nutzer (LAN) und dem Netzwerk.

**30.** System nach Anspruch 28 oder 29, **dadurch gekennzeichnet, dass** die Hardware-Sonden ausgebildet sind, um zumindest ein Element, welches aus der folgenden Gruppe ausgewählt wird, zu bestimmen: Orte, die am häufigsten durch den Nutzer besucht wurden, Hauptnetzwerke, die durch den Nutzertraffic adressiert wurden, Ursprung von jenen, die eine Verbindung zu dem Nutzer herstellen.

31. System nach Anspruch 26 oder 27, **dadurch gekennzeichnet, dass** es Software-Agenten auf den Datenkommunikationsnetzwerk-Zugangsroutem umfasst, um den Traffic des Nutzers nachzuverfolgen.

32. System nach Anspruch 31, **dadurch gekennzeichnet, dass** die Software-Agenten ausgebildet sind, um den Traffic durch die Schnittstelle des Routers des Nutzers nachzuverfolgen, indem die Haupttrafficverbindungen bestimmt werden.

33. System nach Anspruch 31, **dadurch gekennzeichnet, dass** die Software-Agenten ausgebildet sind, um eine Analyse des Betriebsstatuses des entsprechenden Routers mithilfe der CPU Auslastung und des verfügbaren Speichers auszuführen.

34. System nach Anspruch 31, **dadurch gekennzeichnet, dass** es eine Zielmaschine für den Transfer von Statistiken, die durch die Routers erhalten wurden, aufweist.

35. System nach Anspruch 26, **dadurch gekennzeichnet, dass** es ausgebildet ist, um als das Resultat des Nachverfolgungsschrittes des Traffics des Nutzers zumindest einen Parameter, der aus der folgenden Gruppe ausgewählt wird, zu erzeugern:

   Zielnetzwerke des Traffics, Prozentsatz des involvierten Traffics, maßgebliche autonome System.

36. System nach Anspruch 26, **dadurch gekennzeichnet, dass** das Modul (A1) ausgebildet ist, um ein File mit IP Adressen, die die am häufigsten besuchten Orte des Nutzers darstellen, einzulesen, und um eine Nachverfolgungsoperation (traceroute) zu diesem Ziel für jeden Zielort auszuführen, indem der Pfad, um dieses Ziel zu erreichen, nachverfolgt wird.

37. System nach Anspruch 36, **dadurch gekennzeichnet, dass** das erste Modul ausgebildet ist, um den Pfad als eine Sequenz von autonomen Systemen (AS), die passiert wurden, nachzuverfolgen.

38. System nach Anspruch 36, **dadurch gekennzeichnet, dass** das erste Modul ausgebildet ist, um wiederholt die Nachverfolgungsoperationen mit einer gegebenen Frequenz auszuführen.

39. System nach Anspruch 38, **dadurch gekennzeichnet, dass** das erste Modul ausgebildet ist, so dass die Frequenz bestimmt und ausgewählt werden kann.

40. System nach Anspruch 26, **dadurch gekennzeichnet, dass** das zweite Modul (B2) ausgebildet ist, um einen eindeutigen Baum von autonomen Systempfaden, die durch den Traffic des Nutzers passiert werden, um alle Ziele zu erreichen, auszugeben, wobei die Blätter des Baumes die Ziel-Unternetzwerke des Traffics des Nutzers anzeigen.

41. System nach Anspruch 26, **dadurch gekennzeichnet, dass** das zweite Modul (B2) ausgebildet ist, um in Bezug auf die Liste der autonomen Systeme, die von dem Traffic des Nutzers passiert wurden, zumindest einen Parameter aus dem Folgenden bereitzustellen: die Prozentzahl der Nutzung des autonomen Systems, einen Zeitwert des Verbleibs innerhalb der autonomen Systeme und einen Wert von Hops innerhalb des autonomen Systems.

42. System nach Anspruch 41, **dadurch gekennzeichnet, dass** zumindest ein Datenelement oder vorzugsweise alle Daten in Form von Durchschnittswerten bereitgestellt werden.

43. System nach Anspruch 26 oder 36, **dadurch gekennzeichnet, dass** das erste Modul (B1) ausgebildet ist, um für jede IP Adresse, die durch die Nachverfolgungsfunktion (traceroute) erzeugt wurde, einen Ferndienst zu aktivieren, um zumindest eine Information aus der folgenden Gruppe zu erhalten: Name des autonomen Systems, zu welchem die erzeuge IP Adresse gehört, und Nummer des autonomen Systems, zu welchem die zuvor erzeugte IP Adresse gehört.

44. System nach Anspruch 43, **dadurch gekennzeichnet, dass** der Ferndienst der whois-Service der Datenbanken RIBE, ARIN, APNIC ist.

45. System nach Anspruch 26, **dadurch gekennzeichnet, dass** das erste Modul (B1) ein Datenfile (103) ausgibt, welches Informationen, die aus der folgenden Gruppe ausgewählt werden, umfasst:

- Ordnungszahl des autonomen Systems in der Folge der Sequenz der IP Adressen, die durch die Nachverfolgungsfunktion bereitgestellt werden,
- Textname des autonomen Systems,
- Identifizierungsnummer des autonomen Systems,
- Anzahl der Hops, die ein einzelnes Nachverfolgungskommando innerhalb des autonomen Systems gemessen hat,
und
- Anwesenheitszeit in dem autonomen System, die durch ein einzelnes Nachverfolgungskommando gemessen wurde.

46. System nach Anspruch 26 oder 36, **dadurch gekennzeichnet, dass** das erste Modul ausgebildet ist, um parallel mehrere der Nachverfolgungsfunktionen auszuführen.

47. System nach Anspruch 26, **dadurch gekennzeichnet, dass** das zweite Modul (B2) einen Cache-Speicher umfasst, um Information bezüglich der Korrespondenz zwischen den IP Adressen und Daten in Bezug auf die maßgeblichen autonomen Systeme zu speichern.

48. System nach Anspruch 26, **dadurch gekennzeichnet, dass** das zweite Modul ausgebildet ist, so dass die Blätter des Baumes Ziel-Unternetzwerke des Traffics des Nutzers sind und die relativen Zweige autonome Systeme, die durch den Traffic passiert werden, sind.

49. System nach Anspruch 26, **dadurch gekennzeichnet, dass** das zweite Modul (B1) verknüpft ist mit einem Zentralspeicher mit einer Datenstruktur, die die Pfade, die durch das erste Modul in der Form von zumindest einer Sammelliste erzeugt wurden, darstellt.

50. System nach Anspruch 49, **dadurch gekennzeichnet, dass** die zumindest eine Sammelliste als eine solche identifiziert wird, die eine variable Anzahl von autonomen Systemlisten darstellt (VAS), die einen gemeinsamen maximalen Präfix teilen.

51. Computerprogrammprodukt, welches direkt in einen internen Speicher eines numerischen Prozessors ladbar ist und Teile von Software-Code aufweist, um das Verfahren nach einem der Ansprüche 1 bis 25 auszuführen, wenn das Produkt auf einem Prozessor läuft.

**Revendications**

1. Procédure pour l'analyse de l'accès à un réseau de communication de données par un utilisateur (LAN), comprenant les opérations consistant à repérer (A1) le trafic dudit utilisateur (LAN), et identifier un groupe de réseaux avec lequel ledit trafic est principalement géré, en définissant (100) des systèmes autonomes (AS) relatifs et en repérant la séquence de systèmes autonomes traversés par ledit trafic, **caractérisée en ce que** l'opération de repérage de ladite séquence comprend :

   - une première étape (B1), pour fournir la liste (102) des chemins des systèmes autonomes traversés par ledit trafic pour atteindre chaque destination, et
   - une seconde étape (B2), pour élaborer globalement ladite liste de chemins, en fournissant en sortie un arbre représentant tous les chemins des systèmes autonomes traversés par le trafic dudit utilisateur (LAN) pour atteindre toutes les destinations correspondantes.

2. Procédure selon la revendication 1, **caractérisée par le fait qu'**elle comprend l'opération consistant à déterminer le routage dudit trafic sur les branches dudit arbre, et l'opération consistant à associer les valeurs indicatives respectives du trafic qui traverse la branche jusqu'aux branches dudit arbre.

3. Procédure selon la revendication 1 ou la revendication 2, **caractérisée par le fait qu'**elle comprend l'opération consistant à utiliser des sondes de matériel afin de repérer le trafic dudit utilisateur.

4. Procédure selon la revendication 3, **caractérisée par le fait qu'**elle comprend l'opération consistant à configurer lesdites sondes de matériel afin de fournir les informations choisies dans le groupe constitué par : l'utilisation de bande de la liaison individuelle, le volume de données, la subdivision de protocole, la subdivision d'adresse IP, la matrice de trafic entre l'utilisateur (LAN) et le réseau.

5. Procédure selon la revendication 3 ou la revendication 4, **caractérisée par le fait qu'**elle comprend l'opération consistant à configurer lesdites sondes de matériel afin de déterminer au moins un élément choisi dans le groupe constitué par : les sites les plus fréquemment visités par l'utilisateur, les réseaux principaux auxquels l'utilisateur adresse son trafic, et l'origine de qui se connecte audit utilisateur.

6. Procédure selon la revendication 1 ou la revendication 2, **caractérisée par le fait qu'**elle comprend l'opération consistant à établir des agents de logiciel sur les routeurs d'accès de réseau de communication de données afin de repérer ledit trafic utilisateur.

7. Procédure selon la revendication 6, **caractérisée par le fait qu'**elle comprend l'opération consistant à configurer lesdits agents de logiciel afin de repérer le trafic à travers l'interface du routeur dudit utilisateur pour déterminer les lignes principales de trafic.

8. Procédure selon la revendication 6, **caractérisée par le fait qu'**elle comprend l'opération consistant à configurer lesdits agents de logiciel afin d'analyser le statut de fonctionnement du routeur respectif en termes de charge de l'unité centrale et de mémoire disponible.

9. Procédure selon la revendication 6, **caractérisée par le fait qu'**elle comprend l'opération consistant à fournir une machine cible pour le transfert des statistiques obtenues par lesdits routeurs.

10. Procédure selon la revendication 1, **caractérisée par le fait qu'**elle comprend l'opération consistant à générer, en conséquence de ladite opération de repérage de trafic dudit utilisateur, au moins un paramètre choisi dans le groupe constitué par :

les réseaux de destination dudit trafic, le pourcentage de trafic impliqué, le système autonome pertinent.

11. Procédure selon la revendication 1, **caractérisée par le fait que** ladite première étape (B1) comprend les opérations consistant à fournir en entrée un fichier contenant les adresses IP représentant les sites les plus fréquemment visités par ledit utilisateur et à réaliser une fonction d'utilitaire de routage pour chaque site de destination, en repérant le chemin pour atteindre cette destination.

12. Procédure selon la revendication 11, **caractérisée par le fait qu'**elle comprend l'opération consistant à repérer ledit chemin en tant que séquence des systèmes autonomes (AS) traversés.

13. Procédure selon la revendication 11, **caractérisée par le fait que** dans ladite première étape, lesdites opérations de repérage sont réalisées de façon répétée selon une fréquence donnée.

14. Procédure selon la revendication 13, **caractérisée par le fait que** ladite fréquence peut être déterminée et choisie.

15. Procédure selon la revendication 1, **caractérisée par le fait que** ladite seconde étape (B2) comprend l'opération consistant à générer un arbre unique de chemins des systèmes autonomes traversés par le trafic dudit utilisateur pour atteindre toutes les destinations, les feuilles dudit arbre indiquant les sous-réseaux de destination du trafic dudit utilisateur.

16. Procédure selon la revendication 1, **caractérisée par le fait que** ladite seconde étape (B2) comprend l'opération consistant à fournir, par rapport à la liste desdits systèmes autonomes traversés par ledit trafic dudit utilisateur, au moins un paramètre parmi : le pourcentage d'utilisation du système autonome, une valeur temporelle permettant de traverser lesdits systèmes autonomes et une valeur de sauts à l'intérieur du système autonome.

17. Procédure selon la revendication 16, **caractérisée par le fait qu'**au moins une et de préférence toutes lesdites données fournies sont exprimées en tant que valeur moyenne.

18. Procédure selon la revendication 1 ou la revendication 11, **caractérisée par le fait que** ladite première étape (B1) comprend l'opération consistant à appeler pour chaque adresse IP générée via ladite fonction d'utilitaire de routage, un service distant pour obtenir au moins un élément des informations comprises dans le groupe constitué par : le nom du système autonome auquel appartient l'adresse IP générée et le numéro du système autonome auquel appartient ladite adresse IP générée.

**19.** Procédure selon la revendication 18, **caractérisée par le fait que** ledit service distant est le service d'annuaire Internet des bases de données RIBE, ARIN, APNIC.

**20.** Procédure selon la revendication 1, **caractérisée par le fait que** ladite première étape (B1) comprend l'opération consistant à générer un fichier de données (103) comprenant les informations choisies dans le groupe constitué par :

- le numéro d'ordre du système autonome suivant la séquence des adresses IP fournies par ladite fonction d'utilitaire de routage,
- le nom du texte du système autonome,
- le numéro d'identification du système autonome,
- le nombre de sauts qu'une seule commande de repérage a mesurés à l'intérieur du système autonome, et
- le temps de permanence dans le système autonome mesuré par une seule commande de repérage.

**21.** Procédure selon la revendication 1 ou la revendication 11, **caractérisée par le fait qu'**elle comprend l'opération consistant à réaliser une pluralité desdites fonctions de repérage en parallèle durant ladite première étape.

**22.** Procédure selon la revendication 1, **caractérisée par le fait que** ladite seconde étape (B2) comprend l'opération consistant à stocker des informations de correspondance entre des adresses IP et des données concernant les systèmes autonomes pertinents.

**23.** Procédure selon la revendication 1, **caractérisée par le fait que** ladite seconde étape (B2) comprend l'opération consistant à générer les feuilles dudit arbre en tant qu'identification des sous-réseaux de destination du trafic dudit utilisateur et les branches relatives en tant qu'identifications des systèmes autonomes traversés par le trafic.

**24.** Procédure selon la revendication 1, **caractérisée par le fait que** ladite seconde étape (B2) est réalisée en association avec une mémoire centrale avec une structure de données qui représente les chemins générés dans ladite première étape sous forme d'au moins une liste globale.

**25.** Procédure selon la revendication 24, **caractérisée par le fait que** ladite au moins une liste globale est identifiée comme représentant un nombre variable de listes de systèmes autonomes qui partagent un préfixe maximal commun.

**26.** Système pour l'analyse de l'accès à un réseau de communication de données par un utilisateur (LAN), le système étant configuré pour repérer (A1) le trafic dudit utilisateur (LAN) et identifier un groupe de réseaux avec lesquels ce trafic est principalement impliqué, en identifiant (100) les systèmes autonomes (AS) relatifs et en repérant la séquence des systèmes autonomes traversés par ledit trafic ;
**caractérisé en ce que** le système comprend un premier module (B1) qui fournit la liste (102) des chemins des systèmes autonomes traversés par ledit trafic pour atteindre chaque destination, et un second module (B2) qui élabore globalement ladite liste de chemins en fournissant en sortie un arbre représentant tous les chemins des systèmes autonomes traversés par le trafic dudit utilisateur (LAN) pour atteindre toutes les destinations relatives.

**27.** Système selon la revendication 26, **caractérisé par le fait que** le système est configuré pour mesurer le routage dudit trafic sur les branches dudit arbre et associer des valeurs indicatives respectives du trafic traversant la branche jusqu'aux branches dudit arbre.

**28.** Système selon la revendication 26 ou la revendication 27, **caractérisé par le fait qu'**il comprend des sondes de matériel afin de repérer le trafic dudit utilisateur.

**29.** Système selon la revendication 28, **caractérisé par le fait que** lesdites sondes de matériel sont configurées pour fournir des informations choisies dans le groupe constitué par : l'utilisation de la bande de liaison unique, le volume de données, la subdivision de protocole, la subdivision d'adresse IP, la matrice de trafic entre l'utilisateur (LAN) et le réseau.

**30.** Système selon la revendication 28 ou la revendication 29, **caractérisé par le fait que** lesdites sondes de matériel sont configurées pour déterminer au moins un élément choisi dans le groupe constitué par :

les sites les plus fréquemment visités par l'utilisateur, les principaux réseaux auxquels s'adresse le trafic de l'utilisateur, l'origine de ceux qui se connectent audit utilisateur.

31. Système selon la revendication 26 ou la revendication 27, **caractérisé par le fait qu'**il comprend des agents de logiciel sur le routeur d'accès de réseau de communication de données afin de repérer ledit trafic de l'utilisateur.

32. Système selon la revendication 31, **caractérisé par le fait que** lesdits agents de logiciel sont configurés pour repérer le trafic à travers l'interface du routeur dudit utilisateur en déterminant les lignes principales de trafic.

33. Système selon la revendication 31, **caractérisé par le fait que** lesdits agents de logiciel sont configurés pour réaliser une analyse du statut de fonctionnement du routeur respectif en termes de charge de l'unité centrale et de mémoire disponible.

34. Système selon la revendication 31, **caractérisé par le fait qu'**il comprend une machine cible pour le transfert des statistiques obtenues par lesdits routeurs.

35. Système selon la revendication 26, **caractérisé par le fait qu'**il est configuré pour générer, en conséquence de ladite opération de repérage du trafic dudit utilisateur, au moins un des paramètres choisis dans le groupe constitué par : les réseaux de destination dudit trafic, le pourcentage de trafic impliqué, le système autonome pertinent.

36. Système selon la revendication 26, **caractérisé par le fait que** ledit module (A1) est configuré pour fournir en entrée un fichier contenant les adresses IP représentant les sites les plus fréquemment visités par ledit utilisateur et pour réaliser une opération de repérage (utilitaire de routage) jusqu'à cette destination pour chaque site de destination, en repérant le chemin pour atteindre cette destination.

37. Système selon la revendication 36, **caractérisé par le fait que** ledit premier module est configuré pour repérer ledit chemin en tant que séquence des systèmes autonomes (AS) qui sont traversés.

38. Système selon la revendication 36, **caractérisé par le fait que** ledit premier module est configuré pour réaliser de façon répétée lesdites opérations de repérage selon une fréquence donnée.

39. Système selon la revendication 38, **caractérisé par le fait que** ledit premier module est configuré de telle sorte que ladite fréquence peut être déterminée et choisie.

40. Système selon la revendication 26, **caractérisé par le fait que** ledit second module (B2) est configuré pour fournir en sortie un arbre unique des chemins des systèmes autonomes traversés par le trafic dudit utilisateur pour atteindre toutes les destinations, les feuilles dudit arbre indiquant les sous-réseaux de destination du trafic dudit utilisateur.

41. Système selon la revendication 26, **caractérisé par le fait que** ledit second module (B2) est configuré pour fournir, par rapport à la liste desditssystèmes autonomes traversés par ledit trafic dudit utilisateur, au moins un paramètre parmi : le pourcentage d'utilisation du système autonome, une valeur de temps de permanence à l'intérieur desdits systèmes autonomes et une valeur des sauts à l'intérieur dudit système autonome.

42. Système selon la revendication 41, **caractérisé par le fait qu'**au moins une et de préférence toutes lesdites données fournies sont exprimées en tant que valeur moyenne.

43. Système selon la revendication 26 ou la revendication 36, **caractérisé par le fait que** ledit premier module (B1) est configuré pour appeler pour chaque adresse IP générée via ladite fonction de repérage (utilitaire de routage), un service distant afin d'obtenir au moins l'une des informations suivantes comprises dans le groupe constitué par : le nom du système autonome auquel appartient l'adresse IP générée et le numéro du système autonome auquel appartient l'adresse IP générée mentionnée ci-dessus.

44. Système selon la revendication 43, **caractérisé par le fait que** ledit service distant est le service d'annuaire Internet des bases de données RIBE, ARIN, APNIC.

45. Système selon la revendication 26, **caractérisé par le fait que** ledit premier module (B1) fournit en sortie un fichier de données (103) comprenant les informations choisies dans le groupe constitué par :

- le numéro d'ordre du système autonome suivant la séquence des adresses IP fournies par ladite fonction de repérage,
- le nom du texte du système autonome,
- le numéro d'identification du système autonome,
- le nombre de sauts qu'une seule commande de repérage à mesurer à l'intérieur du système autonome, et
- le temps de permanence dans le système autonome mesuré par une seule commande de repérage.

**46.** Système selon la revendication 26 ou la revendication 36, **caractérisé par le fait que** ledit premier module est configuré pour réaliser en parallèle une pluralité desdites fonctions de repérage.

**47.** Système selon la revendication 26, **caractérisé par le fait que** ledit second module (B2) contient une mémoire cache afin de stocker des informations de correspondance entre les adresses IP et les données concernant les systèmes autonomes pertinents.

**48.** Système selon la revendication 26, **caractérisé par le fait que** ledit second module est configuré de telle sorte que les feuilles dudit arbre sont les sous-réseaux de destination du trafic dudit utilisateur et les branches relatives sont les systèmes autonomes traversés par le trafic.

**49.** Système selon la revendication 26, **caractérisé par le fait que** ledit second module (B2) est associé à une mémoire centrale avec une structure de données qui représente les chemins générés par ledit premier module sous forme d'au moins une liste globale.

**50.** Système selon la revendication 49, **caractérisé par le fait que** ladite au moins une liste globale est identifiée comme représentant un nombre variable de listes de systèmes autonomes (VAS) qui partagent un préfixe maximal commun.

**51.** Produit de programme informatique qui peut être chargé directement dans la mémoire interne d'un processeur numérique et comprenant des parties de code de logiciel afin d'implémenter la procédure selon l'une quelconque des revendications 1 à 25 lorsque le produit est exécuté sur un processeur.

Fig_1

Fig_2

# Fig _3

```
■202.169.128.0/18
■194. 15.233.0/24
□142. 60. 15.0/24
□ 62. 80. 15.0/24
■ 22.160. 0.0/16
■192.160. 15.0/24
■203.188. 24.0/24
■ 80. 73. 0.0/20
■ 83. 82. 0.0/20
■194.113.252.0/22
```

# Fig _ 4

2,02%  1,96%  1,43%
2,15%              1,23%
              3,14%  0,75%
3,04%              0,66%
        3,56%      0,50%

```
▣GEOCITIES.COM
■DOUBLECLICK.NET
□ALTAVISTA.COM
□HOTMAIL.COM
■YAHOO.COM
■HITBOX.COM
■TELEGLOBE.NET
■AICQ.COM
■XOOM.COM
▣NETSCAPE.COM
```

# Fig - 5

Legend:
- □ SWITCH-AS (559)
- ■ ALTERNET-AS (701)
- □ INTERBUSINESS (3269)
- □ JANET (786)
- ■ Unisource Internet NL (1136)
- □ SprintLink (1239)
- ■ SWIPNET-AS (1257)
- □ DFN-IP service (1275)
- ■ TCN-AS (1299)
- ■ AOL-AS (2056)
- □ IBM-MMD-AS (2685)
- □ BT-UK-AS (2856)

# Fig - 6

# Fig_7

| AS | MSEC | SALTI (HOP) |
|---|---|---|
| AS 5647 | 33 msec | 4 |
| AS 4536 | 128 msec | 5 |
| AS 4832 | 45 msec | 12 |
| AS 2421 | 63 msec | 6 |

# Fig_8

# Fig. 9

C:/ traceroute www.cisco.com
traceroute to www.cisco.com (198.133.219.25), 30 hops max, 20 byte packets

```
1 163.162.4.165 (163.162.4.165)          2 ms   1 ms   1 ms
2 163.162.4.158 (163.162.4.158)          1 ms   1 ms   1 ms
3 163.162.46.130 (163.162.46.130)         1 ms   1 ms   1 ms
4 radware-FP1.cselt.lt (163.162.41.99)    3 ms   5 ms   4 ms
5 172.16.251.4 (172.16.251.4)         .   4 ms *
  172.16.251.3 (172.16.251.3)             3 ms
6 radware-FP1.cselt.lt (163.162.41.99)    11 ms  10 ms  10 ms
7 202.152.45.20 (202.152.45.20)          3 ms   2 ms   1 ms
8 * * *
9 * * *
```

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0243406 A
- JP 9181722 B
- US 6243754 A

- WO 0217110 A
- WO 0243322 A

**Non-patent literature cited in the description**

- A Border Gateway Protocol 4 (BGP-4. **Y. REKHTER ; T. LI ; RFC 1771.** A Border Gateway Protocol 4 (BGP-4. T. J. Watson Research Center, March 1995